(19) Europäisches Patentamt
European Patent Office
Office européen des brevets

(11) **EP 2 658 087 B1**

(12) **EUROPÄISCHE PATENTSCHRIFT**

(45) Veröffentlichungstag und Bekanntmachung des Hinweises auf die Patenterteilung:
**22.07.2020 Patentblatt 2020/30**

(51) Int Cl.:
*H02K 1/02* *(2006.01)*  *H02K 1/27* *(2006.01)*
*H02K 5/02* *(2006.01)*

(21) Anmeldenummer: **12165990.8**

(22) Anmeldetag: **27.04.2012**

(54) **Permanentmagnetischer Außenläufer für eine elektrische Maschine und elektrische Maschine mit derartigem Läufer**

External permanent magnet rotor for an electric machine and electric machine with such a rotor

Rotor extérieur aux aimants permanents pour une machine électrique et machine électrique comprenant un tel rotor

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.10.2013 Patentblatt 2013/44**

(73) Patentinhaber: **Siemens Aktiengesellschaft 80333 München (DE)**

(72) Erfinder:
• **Dorfner, Matthias 80634 München (DE)**
• **Jajtic, Zeljko 80992 München (DE)**

(56) Entgegenhaltungen:
**DE-A1- 19 917 547      DE-A1-102004 025 226
DE-A1-102011 008 384   US-A1- 2007 163 306
US-B1- 6 492 756**

EP 2 658 087 B1

**Beschreibung**

Die Erfindung betrifft eine elektrische Maschine und einen Außenläufer für eine elektrische Maschine.

Die DE 10 2004 025 226 A1 beschreibt einen Außenläufer mit Permanentmagneten, die von einem hohlzylindrischen Joch aus einem weichmagnetischen Werkstoff umgeben sind. Das Joch besteht aus mehreren ringförmigen Lagen eines weichmagnetischen Werkstoffs. Um Wirbelstromverluste zu verringern, sind die Lagen zueinander elektrisch isoliert, indem wenigstens eine Oberfläche einer jeden Lage mit einer Isolierschicht versehen ist.

Wenn das Rotorjoch zur Gänze geblecht ausgeführt ist (statt es aus einem massiven Stahlring zu fertigen), ergeben sich daraus gerade bei Direktantriebsanwendungen konstruktive Nachteile. Insbesondere bei entsprechenden Außenläufern müssen am Außenumfang Vorrichtungen vorgesehen werden, die das Blechpaket axial fixieren. Durch diese Maßnahmen wird Bauraum verbraucht, der jedoch gerade bei Werkzeugmaschinen oder mobilen Anwendungen für die Direktantriebsanordnung stets sehr knapp bemessen ist.

Der bekannte Außenläufer, dessen Joch mehrere Lagen eines weichmagnetischen Werkstoffs umfasst, erfordert bei gleicher mechanischer Stabilität mehr Bauraum als ein Außenläufer, dessen Joch nicht aus mehreren Lagen aufgebaut ist. Für die Verringerung der Wirbelstromverluste muss also ein zusätzlicher Bauraumbedarf in Kauf genommen werden.

Aus der Druckschrift US 6 492 756 B1 ist ein Außenläufer mit einem rohrförmigen Träger aus Aluminium bekannt. Am Innenumfang des Trägers sind kreissegmentförmige magnetische Rückschlusskomponenten angeordnet. Auf deren Innenseite wiederum sind Permanentmagnete montiert.

Die Druckschrift DE 10 2004 025 226 A1 beschreibt einen Spindelmotor mit einem topfförmigen Rotor, der innen ein geblechtes Joch und Permanentmagnete aufweist.

Aus der US 2007/0163306 A1 ist eine Waschmaschine, insbesondere eine Verbesserung des Aufbaus einer Antriebseinheit, die in einer Trommelwaschmaschine enthalten ist, offenbart. Die Waschmaschine weist eine Wanne zum Aufnehmen von Waschwasser auf, eine Trommel, die drehbar in der Wanne angeordnet ist und zum Waschen von darin aufgenommener Wäsche ausgelegt ist, wobei eine Welle durch die Wanne hindurchgeführt ist, um dadurch mit der Trommel verbunden zu werden, wobei die Welle zum Übertragen einer Antriebskraft ausgelegt ist eines Motors mit der Trommel, eines Stators, der fest mit einem Rückwandabschnitt der Wanne verbunden ist, während er sich auf dem Rückwandabschnitt befindet, und eines Außenrotors, der mindestens einen Magneten, ein ringförmiges Rückjoch, das einen Magnetpfad definiert, und einen Rotor enthält Rahmen drehbar an der Außenseite des Stators angeordnet. Der Rotorrahmen des Rotors ist aus einem Aluminiummaterial hergestellt und umfasst einen Seitenwandabschnitt zum Tragen des Magneten und des ringförmigen Rückschlusses und einen Rückwandabschnitt zum Übertragen einer Drehkraft des Rotors auf die Welle

Die DE 10 2011 008384 A1 ist ein Permanentmagnetläufer für einen bürstenlosen Elektromotor mit einem Innenständer hat eine Tragestruktur bekannt, die aus gespritztem Kunststoff gefertigt ist und die einen im Wesentlichen scheibenförmigen Bereich einschließt, mit dem eine Welle mittig verbunden ist. Der Umfang der Scheibe grenzt an einen im Wesentlichen zylindrischen Käfigbereich, der sich koaxial um die Welle erstreckt. Eine Mehrzahl von magnetisch leitfähigen Jochen ist in dem Käfigbereich angeordnet. Die Joche sind als Ringsegmente geformt, die als ein Ganzes eine im Wesentlichen zylindrische Wand bilden. Eine Mehrzahl von Ringsegmentpermanentmagneten sind jeweils rittlings zu der Kontaktstelle eines Paares von benachbarten Jochen angeordnet. Jedes Joch hat eine Abmessung, die sich von den Umfangsenden davon zu seinem mittleren Umfangsbereich vergrößert, so dass sich die Querschnittsfläche des Joches in einer radialen Ebene entsprechenden von den Enden davon zu seinem mittleren Bereich vergrößert.

Ferner offenbart die Druckschrift DE 199 17 547 A1 einen Elektromotor mit pulvermetallurgischem Rückschluss. Ein dem Rotor zugeordneter Wandungsbereich ist aus dem pulvermetallurgischen Werkstoff mit ferromagnetischen Partikeln hergestellt, wobei deren Leitfähigkeit untereinander durch pulvermetallurgische Zusätze an den Partikelgrenzen herabgesetzt ist.

Die Aufgabe der vorliegenden Erfindung besteht darin, eine elektrische Maschine und einen Außenläufer bereitzustellen, mit dem bei gleichem oder geringerem Bauraumbedarf eine Verringerung der Wirbelstromverluste möglich ist.

Erfindungsgemäß wird diese Aufgabe gelöst durch einen Außenläufer nach Anspruch 1.

Darüber hinaus wird die erfindungsgemäße Aufgabe durch eine elektrische Maschine gelöst, die einen erfindungsgemäßen Außenläufer umfasst.

Dadurch, dass der Außenläufer eine Trägerkomponente umfasst, auf deren Innenumfang die Rückschlusskomponente angeordnet ist, wobei eine elektrische Leitfähigkeit der Rückschlusskomponente niedriger ist als eine elektrische Leitfähigkeit der Trägerkomponente, kann für die Trägerkomponente ein Material mit einer hohen Festigkeit verwendet werden. Gleichzeitig brauchen an die Festigkeit der Rückschlusskomponente nicht so hohe Ansprüche gestellt werden, so dass es leichter gelingt, für die Rückschlusskomponente ein besonderes gut geeignetes Material auszuwählen (d.h. ein Material mit einer hohen magnetischen Permeabilität und zugleich niedrigen Leitfähigkeit).

Eine bevorzugte Weiterbildung sieht vor, dass eine radiale Höhe der Rückschlusskomponente kleiner gleich einem Viertel einer Magnetteilung ist. Hierdurch wird für die Rückschlusskomponente nicht mehr Material und Bauraum verbraucht, als für die Führung des überwiegenden Teils des magnetischen Feldes benötigt wird. Der restliche Bauraum kann für andere Zwecke verwendet werden.

Auch ist bevorzugt, dass eine radiale Höhe der Rückschlusskomponente größer gleich einem Zehntel einer Magnetteilung ist. Hierdurch wird sichergestellt, dass für die Rückschlusskomponente eine Dicke vorgesehen wird, die ausreicht, um einen überwiegenden Teil des magnetischen Feldes durch die Rückschlusskomponente zu führen.

Es kann von Vorteil sein, wenn eine magnetische Permeabilität eines Materials, aus dem die Rückschlusskomponente besteht, größer ist als eine magnetische Permeabilität eines Materials, aus dem die Trägerkomponente besteht. Hierdurch kann erreicht werden, dass das magnetische Feld auf das Material konzentriert wird, in dem Wirbelstromverluste geringer sind.

Die Rückschlusskomponente umfasst einen weichmagnetischen Pulververbundwerkstoff. Die Verwendung von weichmagnetischen Pulververbundwerkstoffen stellt eine erprobte Möglichkeit zur Verringerung einer elektrischen Leitfähigkeit und von Wirbelstromverlusten dar.

Es kann auch zielführend sein, wenn eine spezifische elektrische Leitfähigkeit eines Materials, aus dem die Trägerkomponente besteht, kleiner als $v * 10^6$ S/m ist, wobei v gleich 5, bevorzugt 2,5 oder 1, insbesondere bevorzugt gleich 0,5 ist. Hierdurch lässt sich eine Ausbildung von solchen Wirbelströmen verringern, die sich aufgrund eines magnetischen Restfeldes in der Trägerkomponente, d.h. hinter der Rückschlusskomponente, ausbilden können.

Eine Weiterbildung sieht vor, dass die Trägerkomponente aus einem Faserverbundwerkstoff gefertigt ist. Hierdurch lässt sich ein kompakter, trägheitsarmer und gewichtssparender Aufbau des Außenläufers erreichen.

Die Erfindung ist anhand der beigefügten Zeichnungen näher erläutert, in denen zeigen:

FIG 1    schematisch einen Detailschnitt mit einer Wirbelstromdichteverteilung in einem vollständig massiven Joch nach dem Stand der Technik,

FIG 2    schematisch eine perspektivische Schnittansicht eines erfindungsgemäßen verlustoptimierten Außenläufers,

FIG 3    einen Vergleich von rotorseitigen Wirbelstromverlusten für verschiedene Rotorvarianten,

FIG 4    schematisch einen Detailschnitt eines erfindungsgemäßen Kombijochs mit einer Illustration eines Verlaufs der magnetischen Feldlinien im Kombijoch,

FIG 5    links eine Explosionszeichnung eines Sichelblechpakets, rechts oben ein geschrägtes Sichelblechpaket und unten eine Draufsicht auf ein Sichelblech,

FIG 6    eine perspektivische Ansicht und eine Seitenansicht einer Rückschlusskomponente aus einem SMC-Werkstoff.

Die nachfolgend näher geschilderten Ausführungsbeispiele stellen bevorzugte Ausführungsformen der vorliegenden Erfindung dar.

Direktantriebe sind üblicherweise dafür vorgesehenen, Positionieraufgaben durchzuführen und dabei hohe Drehmomente allenfalls bei geringer Drehzahl während einer Positionsänderung beispielsweise mit einer Drehzahl n <= 20 rpm, bereitzustellen. Aus diesem Grund werden elektrische Maschinen, die dafür geeignet sind, auch Torquemotoren genannt. Solche Torquemotoren arbeiten in der Regel mit Permanentmagneten (Oberflächenmagneten), die auf einem massiven Stahlring (Trägerring) aufgeklebt sind.

Von Torquemotoren werden zunehmend sowohl hohe Drehmomente als auch hohe Drehzahlen gefordert, beispielsweise zur drehenden und fräsenden Bearbeitung von Werkstücken in Werkzeugmaschinen (Dreh-Fräsen). Für NC-Maschinen werden Applikationen immer wichtiger, in denen Werkstücke in Werkzeugmaschinen (z.B. auf Rundtischen) positioniert und mit hohen Momenten zur Bearbeitung in bestimmten Positionen gehalten und in derselben Werkzeugmaschine drehend und/oder fräsend bearbeitet werden, ohne dass ein Wechsel in eine andere Werkzeugmaschine notwendig wäre. Darüber hinaus können besondere Ausführungsformen in mobilen Systemen (z.B. Kraftfahrzeuge, Flugzeuge) Anwendung finden.

In derartigen Motoren werden Oberwellenwicklungen, beispielsweise Zahnspulen (auch konzentrierte Wicklungen), eingesetzt. Dabei ist der Rotor, insbesondere der Außenläufer, beträchtlichen Feldänderungen ausgesetzt, die zu hohen Wirbelströmen und damit hohen Wirbelstromverlusten in dem massiven Stahlring (Trägerring) und in den darauf angeordneten Oberflächenmagneten führen. Diese Wirbelstromverluste haben wiederum eine Erwärmung des Trägerrings und der Oberflächenmagnete zur Folge. Dies trägt erheblich zur Schmälerung des Wirkungsgrades des Torquemotors und damit des Antriebes bei.

Wirbelstromverluste sind aber auch zu vermeiden oder wenigstens zu minimieren, weil sie zu einem unerwünschten Wärmeeintrag in benachbarte Maschinenteile führen können. Beispielsweise ist ein Wärmeeintrag vom Rotor in den Rundtisch einer Werkzeugmaschine zur hochpräzisen Bearbeitung von Werkstücken unerwünscht, da dies zu großen Ungenauigkeiten bei der mechanischen Bearbeitung des Werkstücks führen kann.

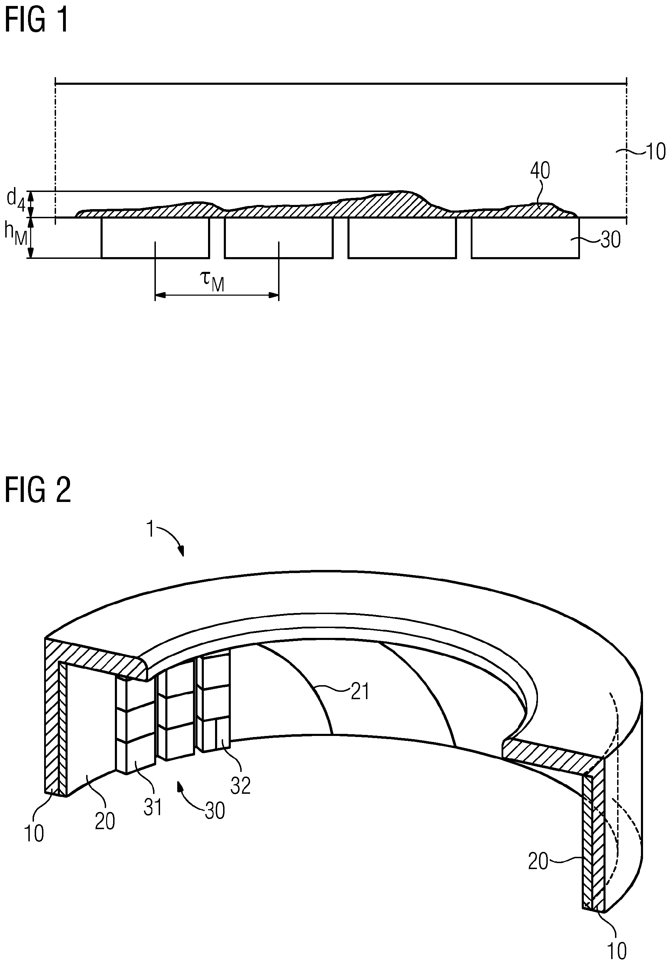

Die FIG 1 zeigt schematisch einen Detailschnitt mit einer exemplarischen Wirbelstromdichteverteilung in einem vollständig massiven Joch nach dem Stand der Technik. Aus FIG 1 geht hervor, dass sich in einem massiven Joch 10 die Wirbelströme 40 nur in einem Bereich der Dicke $d_4$ der Eindringtiefe in das Joch 10 schließen. In der Regel gilt $d_4$

$< h_M$, wobei die Eindringtiefe unter anderem von der magnetischen Luftspaltbreite ($h_M + \delta$) der Maschine abhängig ist.

Die vorliegende Erfindung betrifft einen verlustreduzierten und bauraumoptimalen Außenläufer 1 einer elektrischen Maschine, insbesondere einer elektrischen Maschine für Direktantriebsanwendungen mit konzentrierten Wicklungen (auch Zahnspulenwicklungen oder Oberwellenwicklungen) und mit Oberflächenmagneten zur Anwendung sowohl für Positionieraufgaben als auch für kontinuierliches Drehen (kurz: High-Speed-Außenläufer für Torquemotoren).

Die FIG 2 zeigt ein Ausführungsbeispiel eines verlustoptimierten Außenläufers 1 mit einer Trägerkomponente 10 und einer geblecht ausgeführten Rückschlusskomponente 20. Die Oberflächenmagnete 30 sind über den gesamten Innenumfang verteilt. Der Übersichtlichkeit halber sind nur einige davon abgebildet. Die Oberflächenmagnete 30 können als unsegmentierte Magnete 31 oder als segmentierte Magnete 32 ausgeführt sein, wobei bei segmentierten Magneten 32 eine tangentiale Segmentierung (wie abgebildet in Umfangsrichtung) einer axialen Segmentierung vorzuziehen ist. Insbesondere diese sogenannte tangentiale Magnetsegmentierung reduziert die Wirbelstromverluste und damit die Erwärmung innerhalb des Magnetkörpers beträchtlich.

Alternativ zu segmentierten Oberflächenmagneten 30 können kunststoffgebundene Magnete eingesetzt werden. Bei kunststoffgebundenen Magneten sind die Körner des Basispulvers mit einer Kunststoffschicht überzogen. Diese Beschichtung erlaubt es, die Körner in einer Kunststoffmatrix zu einem Magnetkörper zu formen. Die elektrische Leitfähigkeit ist gegenüber standardmäßig gesinterten Magneten (z.B. NdBFe-Magnete) beispielsweise um das 10- bis 100-fache reduziert.

Gemäß einem hier nicht beanspruchten Beispiel sind die geblechten Rückschlusskomponenten 20 als Sichelbleche ausgeführt, die beispielsweise derart in Umfangsrichtung an der Innenseite der Trägerkomponente 10 angeordnet werden, dass sie axial eine schräge Übergangsfuge 21 bilden. Ein Blechpaket bildet demnach abgewickelt eine Rautenform. Einige der Oberflächenmagnete 30 überspannen die Übergangsfugen 21 und bilden damit eine zusätzliche mechanische Sicherung der Sichelbleche.

Gemäß einem Ausführungsbeispiel sind die Rückschlusskomponenten 20 aus einem weichmagnetischen Pulververbundwerkstoff (SMC; soft magnetic composite) gefertigt.

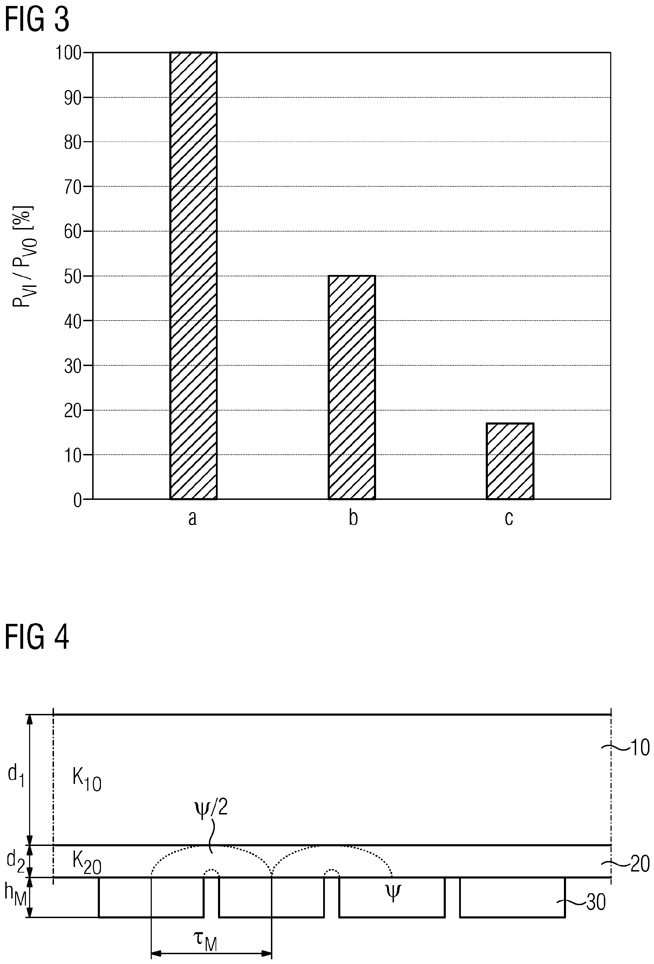

In FIG 3 sind illustrativ die Auswirkungen der erfindungsgemäßen Merkmale auf die rotorseitigen Wirbelstromverluste bezogen auf die gesamten Wirbelstromverluste ohne geblechte Jochkomponenten und ohne segmentierte Magnete gezeigt. Die Säulen bedeuten:

a: gesamte Wirbelstromverluste $P_{Vo}$ für massive, voll leitfähige Rückschlusskomponente;

b: Wirbelstromverluste $P_{Va}$ für geblechte Rückschlusskomponente bzw. SMC-Rückschlusskomponente und nichtsegmentierte Magnete bezogen auf $P_{Vo}$;

c: Wirbelstromverluste Pvc für geblechte Rückschlusskomponente bzw. SMC-Rückschlusskomponente und 4-fach segmentierte Magnete bezogen auf $P_{Vo}$.

Es wird deutlich, dass die Wirbelstromverluste signifikant reduziert werden. Die FIG 3 gibt lediglich die Größenordnungen der mit den erfindungsgemäßen Maßnahmen einhergehenden Verlustreduktion wieder; die Verluste hängen letztlich vom jeweiligen Maschinendesign ab.

In FIG 4 ist ein hier nicht beanspruchtes, teilweise geblechtes Joch (Kombijoch) schematisch in einer Schnittzeichnung dargestellt. In FIG 4 bezeichnet rotorseitig:

10:     eine Trägerkomponente (z.B. aus Edelstahl, Aluminium, Grauguss oder CFK/GFK).
20:     eine Rückschlusskomponente,
30:     Oberflächenmagnete (z.B. aus NdBFe).
$K_{10}$ :   die elektrische Leitfähigkeit der Trägerkomponente 10,
$K_{20}$:    die elektrische Leitfähigkeit der Rückschlusskomponente 20,
$d_1$:     die radiale Dicke der Trägerkomponente 10,
$d_2$:     die radiale Dicke der Rückschlusskomponente 20,
$h_M$::    die radiale Magnethöhe, und
$\tau_M$:    die Magnetteilung (in Umfangsrichtung).

Gegenstand der vorliegenden Erfindung ist ein Rotor, insbesondere ein Außenläufer, mit

• einer in axialer Richtung massiven Trägerkomponente 10 und mit
• einer magnetischen Rückschlusskomponente 20 mit geringer elektrischer Leitfähigkeit der radialen Höhe $d_2$, wobei
• die radiale Höhe gegeben ist durch:

$$d_2 = [\tau_M/10 \; ; \; \tau_M/4] \qquad (1.1).$$

Im vorliegenden Außenläufer ist gemäß Gleichung 1.1 die maximale Dicke der Rückschlusskomponente 20 zu $\tau_M/4$ ausreichend. Dies wird an FIG 1 deutlich, in der die Wirbelstromverteilung 40 in einem in axialer Richtung vollständig massiv ausgeführten Joch 10 abgebildet ist.

Bei Maschinen mit sehr kleinem Luftspalt, beispielsweise $\delta = h_M/10$ kann es vorkommen, dass sich nicht der gesamte rotorseitige Fluss innerhalb der Rückschlusskomponente 20 schließt, sondern über die Rückschlusskomponente 20 hinaus in die Trägerkomponente 10 hineinreicht. Damit ist bei bestimmten Antriebsanordnungen die Trägerkomponente 10 Feldänderungen ausgesetzt, was zu Wirbelströmen und folglich zu Wirbelstromverlusten führt. Eine Weiterbildung des Erfindungsgedankens besteht deshalb darin, die Trägerkomponente 10 aus einem Metall zu fertigen, dessen elektrische Leitfähigkeit $\kappa_{10}$ wesentlich kleiner ist als bei Stahl $\kappa_{ST}$ (z.B. ST37), so dass beispielsweise gilt:

$$\kappa_{10} = [\kappa_{ST}/10 \: : \: \kappa_{ST}/5] \qquad (1.2)$$

Die elektrische Leitfähigkeit von üblicherweise für Trägerkomponente 10 eingesetzten Materialen (z.B. ST37) liegt beispielsweise in einem typischen Bereich von $\kappa_{ST} \cong 10 * 10^6$ S/m. Um die Gleichung 1.2 zu erfüllen, können die Trägerkomponenten 10 aus Grauguss mit einer maximalen Leitfähigkeit von $\kappa_{max} = 2 * 10^6$ S/m gefertigt werden.

Andererseits kann die Trägerkomponente 10 aus einem üblicherweise magnetisch und elektrisch inaktivem Faserverbundwerkstoff (z.B. GFK, CFK) gefertigt werden, beispielsweise zur Anwendung in Leichtbaumaschinen. Leichtbaumaschinen können beispielsweise in neuartigen Antrieben (wie für E-Mobility, E-Craft) verwendet werden.

In FIG 4 sind schematisch die sich bei der vorliegenden Anordnung einstellenden magnetischen Flusspfade zwischen den Polen (Magneten) dargestellt. Der Fluss $\Psi$ eines Magneten teilt sich auf in zwei Flusspfade zu $\Psi/2$. Der magnetische Fluss berechnet sich vereinfacht zu

$$\Psi = B_r * A_M \qquad mit \; A_M = l_{FE} * \tau_M \qquad (1.3)$$

wobei $B_r$ die Remanenz und $A_M$ die dem Fluss zur Verfügung stehende Fläche ist. Weiterhin sei $l_{FE}$ im Folgenden die axiale Länge der Maschine. Aus FIG 4 und Gleichung 1.3 ergibt sich zwischen zwei benachbarten Polen der magnetische Fluss

$$\Psi' = \Psi/2 = B_r * A_M * 1/2 = B_{Blech} * A_{Blech} = B_{Blech} * d_2 * l_{FE} \qquad (1.4)$$

Dynamobleche, wie etwa M700-5OAP, sind in der Lage, magnetischen Fluss bis zu Flussdichten von $B_{Blech} = 2$ T zu führen, ohne signifikant in den Sättigungsbereich überzugehen. Unter dieser Voraussetzung und unter Berücksichtigung der Gleichungen 1.3, 1.4 ergibt sich die maximale radiale Höhe gemäß der eingangs genannten Beziehung 1.1.

Die Rückschlusskomponenten 20 werden mittels einer form- und kraftschlüssigen Verbindung (z.B. Klebung) auf der Trägerkomponente 10 angeordnet. Eine Klebung ist insbesondere bei Außenläufern mechanisch möglich, da bei kontinuierlicher Rotordrehung auftretende Zentripetalkräfte zur Trägerkomponente 10 hin druckbelastend auf die Klebeverbindung wirken.

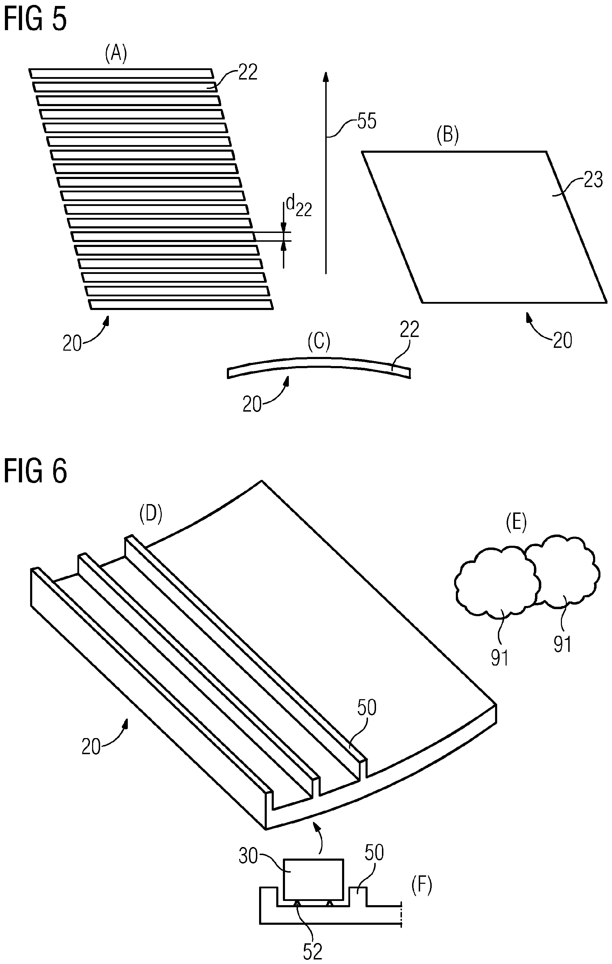

In FIG 5 sind in einer Explosionszeichnung (A) mehrere Sichelbleche 22 mit der Blechstärke $d_{22}$ der geblechten Jochkomponenten 20 dargestellt. Die angedeutete axiale Richtung 55 des Außenläufers gilt für die Darstellungen (A), (B). Die Blechstärke kann beispielsweise $d_{22} = 0,2$ bis $1,0$ mm betragen. Weiterhin ist in (B) schematisch ein Blechpaket 23 dargestellt, das aus den Sichelblechen 22 besteht. In (C) ist eine Draufsicht auf ein gekrümmtes Sichelblech 22 dargestellt.

Im Übrigen sind die Oberflächenmagnete 30 bevorzugt auf die Sichelbleche geklebt. Um den aufgeklebten Oberflächenmagneten 30 zusätzliche mechanische Festigkeit zu verleihen, können die Fugen zwischen den Magneten verspachtelt werden.

In FIG 6 zeigt (D) eine Rückschlusskomponente 20 aus einem weichmagnetischen Pulververbundwerkstoff (SMC: *soft magnetic composite)*. SMC-Komponenten werden üblicherweise mittels eines Sinterprozesses hergestellt, weshalb hinsichtlich der Formgebung zahlreiche Freiheitsgrade bestehen. So ist es beispielsweise möglich, eine Rückschlusskomponente 20 vorzusehen, die Stege 50 aufweist, in deren Zwischenraum die Oberflächenmagnete 30 angeordnet werden. Zusätzlich dazu können, wie in (F) gezeigt, zwischen den Stegen 50 Abstandshalter 52 zur Bereitstellung eines definierten Klebespaltes vorgesehen werden. SMC-Komponenten bestehen aus einem Sinterwerkstoff, dessen Körner 91, 91 voneinander isoliert sind (E), was zur Minderung von Wirbelströmen führt. Diese Isolation kann entweder mittels einer organischen Matrix erfolgen oder durch Oberflächenoxidation der Körner des Basispulvers bewerkstelligt werden. Durch Kornisolation mittels Oberflächenoxidation (also ohne Verwendung einer organischen Matrix) sind bei geringen Hystereseverlusten besonders hohe Permeabilitäten und Sättigungsflussdichten möglich. Es gibt Hochleistungs-SMC-Werkstoffe deren spezifischer elektrischer Widerstand im Bereich von $R_{spez} = 500\ \mu\Omega m$ liegt (beispielsweise Höganäs SOMALOY® 3P).

Mit einem wie in Figur 6 D) gezeigten SMC-Rückschluss 20 wäre es denkbar, den Rückschluss vor Montage an der Trägerkomponente 10 mit Magneten 30 zu bestücken. Dies kann fertigungstechnische Vorteile mit sich bringen. Wie für die in Figur 5 (A), (B), (C) gezeigten Bleche kann ein SMC-Rückschluss 20 mittels einer Klebeverbindung an der Trägerkomponente 10 angebracht werden.

Wird der erfindungsgemäße Außenläufer 1 auf einen Stator montiert, so erweist sich bei Zahnspulenwicklungen eine Lochzahl von

$$q = 2/5 \qquad (1.5)$$

hinsichtlich der von dem Statorfeld verursachten Rotorverluste vorteilhaft. Die Rotorverluste sind gegenüber anderen Lochzahlen deutlich kleiner. Die Lochzahl, also die Anzahl der Nuten pro Pol und Strang, ist allgemein gegeben durch

$$q = N/(2p * m) \qquad (1.6)$$

wobei N die Anzahl der Nuten in einem Motor (bzw. in einem Motormodul), 2p die Polzahl in einem Motor (bzw. in einem Motormodul) und m die Anzahl der Stränge (typischerweise 3-strängig) in einem Motor (bzw. in einem Motormodul) ist. Torquemotoren können aus einer Mehrzahl von in Umfangsrichtung benachbart zueinander angeordneten Motormodulen aufgebaut sein, von denen jedes für sich allein einen eigenständigen und funktionsfähigen Motor bildet. Eine beispielhafte Standardkonfiguration wäre beispielsweise ein Motormodul mit 12 Statorzähnen, von denen jeder eine Spule (Zweischichtwicklung) oder jeder zweite eine Spule (Einschichtwicklung) trägt, gegenüber 14 korrespondierenden Rotorpolen (jeweils gebildet durch einen Magneten).

Die Beziehung 1.5 lässt sich beispielsweise erfüllen, indem auf einen Stator, der aus Modulen zu jeweils 12 Zähnen besteht, ein Rotor gesetzt wird, der jeweils 10 Magnete korrespondierend zu den 12 Statorzähnen trägt, wobei die Wicklung als Zweischichtwicklung ausgeführt ist. Ein vollständiger Motor kann beispielsweise aus fünf Modulen bestehen: Es ergeben sich 60 Zähne (und dazu 60 Spulen) und 50 Rotorpole (Oberflächenmagnete).

Gemäß Gleichung 1.1 ist eine maximale radiale Dicke $d_2$ der Rückschluss- bzw. Trägerkomponente 20 von $\tau_M/4$ ausreichend, anstatt das gesamte Joch geblecht auszuführen. Dies bietet den Vorteil, dass der Außenläufer 1 am äußeren Umfang aus einem massiven Stahl- oder Gussteil gefertigt werden kann. Wäre das gesamte Joch 10, 20 geblecht ausgeführt, müsste am äußeren Umfang eine Vorrichtung vorgesehen werden, die die Einzelbleche axial stabil in einem Paket zusammenhält. Dies kann etwa mittels Gewindestangen oder Nutensteinen realisiert werden. In jedem Fall wird zusätzlicher Bauraum benötigt, der allerdings für Direktantriebsanwendungen stets knapp bemessen ist. Beim dem erfindungsgemäßen Außenläufer 1 ist eine derartige Vorrichtung nicht erforderlich. Die erfindungsgemäßen Rückschlusskomponenten 20 können auf einfache Weise auf die massive Jochkomponente 10 aufgeklebt werden, ohne dass zusätzliche Sicherungsmaßnahmen erforderlich wären. Kurz: Die Merkmale des erfindungsgemäßen Außenläufers 1 ermöglichen eine kompakte und bauraumoptimale Realisierung eines High-Speed-Außenläufers.

Besteht die Trägerkomponente 10 gemäß einem Ausführungsbeispiel aus einem Gussteil, beispielsweise Grauguss, so bietet dies zusätzlich zur reduzierten elektrischen Leitfähigkeit den Vorteil, dass Graugusskomponenten gegenüber Stahl- oder Edelstahlkomponenten wesentlich preisgünstiger sind.

Die Verwendung von Sichelblechen 22 und deren Klebung auf die Trägerkomponente 10 ermöglicht einen konstruktiv einfachen Aufbau. Dies ist besonders bei der Serienfertigung des Außenläufers vorteilhaft, die dann zeitoptimal durchgeführt werden kann. Darüber hinaus wird die Klebeverbindung während des Betriebs durch die Zentripetalkraft nicht belastet.

Als Alternative zu den Sichelblechen 22 werden für die Rückschlusskomponente 20 SMC-Bauteile vorgeschlagen. Dadurch ist kein Blechpaket erforderlich. Außerdem können Designfeinheiten bei SMC-Komponenten flexibel und kostengünstig realisiert werden.

Wird die Trägerkomponente 10 aus einem magnetisch inaktiven Leichtbaumaterial ausgeführt, so kann die erfindungsgemäße Anordnung optimal auf das Leistungsgewicht ausgeführt werden. Das Leistungsgewicht (Leistung pro Masse in W/kg ist insbesondere bei mobilen Anwendungen wichtig, wie in Flug- oder Kraftfahrzeugen. Dort wird von elektrischen Antrieben ein Leistungsgewicht im Bereich von beispielsweise 7 bis 10 kW/kg gefordert (E-Motoren liegen üblicherweise bei 1 kW/kg), wofür unkonventionelle Designmaßnahmen, wie etwa vorliegend erläutert, erforderlich sind.

Ein vorteilhafter Torquemotor mit einem Außenläufer mit Oberflächenmagneten kann einen Außenläufer mit einem Rotorjoch umfassen, das folgende Merkmale aufweist:

- eine ersten Jochkomponente (Trägerkomponente 10 zur Gewährleistung mechanischer Stabilität), die aus einem gegenüber Stahl elektrisch vermindert leitfähigem Werkstoff gefertigt ist, und
- wenigstens eine zweite Jochkomponente (Rückschlusskomponente für den rotorseitigen magnetischen Fluss), die in axialer Richtung geblecht ausgeführt oder aus einem magnetischen Pulverwerkstoff (SMC) gefertigt ist und deren Dimensionen in radialer Richtung der Gleichung 1.1 genügen.

Insbesondere die Kombination aus einer radial dünnen Rückschlusskomponente 20 und einer Trägerkomponente 10 aus anderem Material ist vorteilhaft. Insgesamt führt dies gegenüber bekannten Lösungen zu einem bauraumoptimalen High-Speed-Außenläufer. Darüber hinaus kann durch eine radial dünne Rückschlusskomponente in Kombination mit einer Trägerkomponente 10 aus einem Leichtbauwerkstoff (CFK, GFK) das Leistungsgewicht eines Motors erhöht werden.

## Patentansprüche

1. Außenläufer (1) für eine elektrische Maschine, wobei der Außenläufer (1) eine Rückschlusskomponente (20) und mehrere Magnete (30) umfasst, die auf einem Innenumfang der Rückschlusskomponente (20) angeordnet sind, wobei der Außenläufer (1) eine Trägerkomponente (10) umfasst, auf deren Innenumfang die Rückschlusskomponente (20) angeordnet ist, wobei eine elektrische Leitfähigkeit ($\kappa_{20}$) der Rückschlusskomponente (20) niedriger ist als eine elektrische Leitfähigkeit ($\kappa_{10}$) der Trägerkomponente (10), die Rückschlusskomponente (20) umfasst einen weichmagnetischen Pulververbundwerkstoff und die mehreren Magnete (30) sind über den gesamten Innenumfang der Rückschlusskomponente (20) verteilt, **dadurch gekennzeichnet,**

   - **dass** die Trägerkomponente (10) aus einem Faserverbundwerkstoff gefertigt ist,
   - **dass** die Rückschlusskomponente (20) Stege (50) aufweist, in deren Zwischenraum die mehreren Magnete (30) angeordnet sind,
   - **dass** die mehreren Magnete (30) als segmentierte Magnete (32) mit einer in Umfangsrichtung durchgeführter Segmentierung ausgeführt sind,
   - wobei die Magnetsegmentierung zur Reduzierung der Wirbelstromverluste und der Erwärmung innerhalb des Magnetkörpers vorgesehen ist.

2. Außenläufer (1) nach Anspruch 1,
   **dadurch gekennzeichnet,**
   **dass** eine radiale Höhe ($d_2$) der Rückschlusskomponente (20) kleiner gleich einem Viertel einer Magnetteilung ($\tau_M$) ist.

3. Außenläufer (1) nach Anspruch 1 oder 2,
   d adurch gekennzeichnet,
   dass eine radiale Höhe ($d_2$) der Rückschlusskomponente (20) größer gleich einem Zehntel einer Magnetteilung ($\tau_M$) ist.

4. Außenläufer (1) nach einem der vorhergehenden Ansprüche,
   **dadurch gekennzeichnet,**
   **dass** eine magnetische Permeabilität eines Materials, aus dem die Rückschlusskomponente (20) besteht, größer ist als eine magnetische Permeabilität eines Materials, aus dem die Trägerkomponente (10) besteht.

5. Außenläufer (1) nach einem der vorhergehenden Ansprüche,
   **dadurch gekennzeichnet,**
   **dass** eine elektrische Leitfähigkeit ($\kappa_{10}$) eines Materials, aus dem die Trägerkomponente (10) besteht, kleiner ist als v * $10^6$ S/m, wobei v gleich 5, bevorzugt 2,5 oder 1, insbesondere bevorzugt gleich 0,5 ist.

6. Elektrische Maschine,

**dadurch gekennzeichnet,**
**dass** die elektrische Maschine einen Außenläufer (1) gemäß einem der Ansprüche 1 bis 5 umfasst.

7. Elektrische Maschine nach Anspruch 6,
   **dadurch gekennzeichnet,**
   **dass** die Trägerkomponente (10) aus einem magnetisch inaktiven Leichtbaumaterial ausgeführt ist, dass die elektrische Maschine zum Einsatz in Flug- oder Kraftfahrzeugen vorgesehen ist und dass die elektrische Maschine ein Leistungsgewicht im Bereich von 7 bis 10 kW/kg aufweist.

**Claims**

1. External rotor (1) for an electric machine, wherein the external rotor (1) comprises a yoke component (20) and multiple magnets (30) which are arranged on an inner circumference of the yoke component (20), wherein the external rotor (1) comprises a carrier component (10), on the inner circumference of which the yoke component (20) is arranged, wherein an electrical conductivity ($\kappa_{20}$) of the yoke component (20) is lower than an electrical conductivity ($\kappa_{10}$) of the carrier component (10),
   the yoke component (20) comprises a soft magnetic powder compound substance and the multiple magnets (30) are distributed over the entire inner circumference of the yoke component (20),
   **characterised in that**

   - the carrier component (10) is manufactured from a fibre composite material,
   - the yoke component (20) has webs (50), in the interspace of which the multiple magnets (30) are arranged,
   - the multiple magnets (30) are embodied as segmented magnets (32) with a segmentation performed in the circumferential direction,
   - wherein the magnet segmentation is intended to reduce the eddy current losses and the warming inside the magnet body.

2. External rotor (1) according to claim 1,
   **characterised in that**
   a radial height ($d_2$) of the yoke component (20) is less than or equal to one quarter of a magnetic pitch ($\tau_M$).

3. External rotor (1) according to claim 1 or 2,
   **characterised in that**
   a radial height ($d_2$) of the yoke component (20) is greater than or equal to one tenth of a magnetic pitch ($\tau_M$).

4. External rotor (1) according to one of the preceding claims,
   **characterised in that**
   a magnetic permeability of a material from which the yoke component (20) is made is greater than a magnetic permeability of a material from which the carrier component (10) is made.

5. External rotor (1) according to one of the preceding claims,
   **characterised in that**
   an electrical conductivity ($\kappa_{10}$) of a material from which the carrier component (20) is made is less than v $*$ $10^6$ S/m, where v is equal to 5, preferably 2.5 or 1, particularly preferably equal to 0.5.

6. Electric machine,
   **characterised in that**
   the electric machine comprises an external rotor (1) according to one of claims 1 to 5.

7. Electric machine according to claim 6,
   **characterised in that**
   the carrier component (10) is made of a magnetically inactive lightweight construction material, the electric machine is intended for use in aeroplanes or motor vehicles, and the electric machine has a power/weight ratio in the range between 7 and 10 kW/kg.

**Revendications**

1. Rotor (1) extérieur d'une machine électrique, le rotor (1) extérieur comprenant un élément (20) de retour et plusieurs aimants (30) disposés sur un pourtour intérieur de l'élément (20) de retour, le rotor (1) extérieur comprenant un élément (10) de support sur le pourtour intérieur duquel est disposé le composant (20) de retour, une conductivité $(k_{20})$ électrique de l'élément (20) de retour étant plus petite qu'une conductivité $(k_{10})$ électrique de l'élément (10) de support,
l'élément (20) de retour comprend un matériau composite en poudre à magnétisme doux et les plusieurs aimants (30) sont répartis sur tout le pourtour intérieur de l'élément (20) de retour,
**caractérisé**

   - **en ce que** l'élément (10) de support est en un matériau composite à fibre,
   - **en ce que** l'élément (20) de retour a des nervures (50) dans les intervalles desquelles sont disposés les plusieurs aimants (30),
   - **en ce que** les plusieurs aimants (30) sont réalisés sous la forme d'aimants (32) segmentés ayant une segmentation effectuée dans la direction périphérique,
   - dans lequel la segmentation des aimants est prévue pour réduire les pertes par courant de Foucault et l'échauffement à l'intérieur du corps de l'aimant.

2. Rotor (1) extérieur suivant la revendication 1,
**caractérisé**
**en ce qu'**une hauteur $(d_2)$ radiale du composant (20) de retour est inférieure ou égale à un quart d'un pas $(\tau_M)$ des aimants.

3. Rotor (1) extérieur suivant la revendication 1 ou 2,
**caractérisé**
**par** une hauteur $(d_2)$ radiale du composant (20) de retour supérieure ou égale à un dixième d'un pas $(\tau_M)$ des aimants.

4. Rotor (1) extérieur suivant l'une des revendications précédentes,
**caractérisé**
**en ce qu'**une perméabilité magnétique d'un matériau, dont l'élément (20) de retour est constitué, est plus grande qu'une perméabilité magnétique d'un matériau, dont l'élément (10) de support est constitué.

5. Rotor (1) extérieur suivant l'une des revendications précédentes,
**caractérisé**
**en ce qu'**une conductivité $(k_{10})$ électrique d'un matériau, dont l'élément (10) de support est constitué, est plus petite que v * $10^6$ S/m, v étant égal à 5, de préférence étant égal à 2,5 ou 1, en étant notamment de préférence égal à 0,5.

6. Machine électrique,
**caractérisé**
**en ce que** la machine électrique comprend un rotor (1) extérieur suivant l'une des revendications 1 à 5.

7. Machine électrique suivant la revendication 6,
**caractérisé**
**en ce que** l'élément (10) de support est en un matériau léger inactif magnétiquement, prévu dans les machines électriques à utiliser dans les aéronefs ou les véhicules automobiles et en ce que la machine électrique a un poids par unité de puissance dans la plage de 7 à 10 Kw/kg.

FIG 1

FIG 2

## FIG 3

## FIG 4

FIG 5

(A)

22

$d_{22}$

55

20

(B)

23

20

(C)

22

20

FIG 6

(D)

(E)

91    91

20

50

30    50

(F)

52

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004025226 A1
- US 6492756 B1
- US 20070163306 A1
- DE 102011008384 A1
- DE 19917547 A1